# EUROPEAN PATENT SPECIFICATION

(11) **EP 2 778 962 B1**
(45) Date of publication and mention of the grant of the patent: **02.09.2015**
(21) Application number: 14000860.8
(22) Date of filing: 11.03.2014
(51) Int. Cl.: G06F 17/30, G06F 11/36

(54) **Silo-aware databases**
Silo-Bewusstseins-Datenbanken
Bases de données d'informations de silo

(30) Priority: 14.03.2013 US 201313804939
(43) Date of publication of application: 17.09.2014
(73) Proprietor: SAP SE, 69190 Walldorf (DE)
(72) Inventor: Bloching, Uwe, 69190 Walldorf (DE); Rau, Stefan, 69190 Walldorf (DE)
(74) Representative: Müller-Boré & Partner Patentanwälte PartG mbB

(56) References cited:
- US-A1- 2012 084 407
- US-A1- 2012 284 296

## Description

### FIELD

The present disclosure relates generally to database access, and in a specific example embodiment, to a silo-aware database.

### BACKGROUND

A developer of software applications that access and manipulate data stored in a database faces several problems during development and lifetime of the applications. First, the database has to be verified so that the access and the manipulation of data stored in the database operate correctly according to the logic dictated by the software application. One way to perform this task is to create unit tests that are used to test the different software components of an application. These tests call for special sets of test data stored in the database to ensure the predictability of the test results. Because the unit tests are also supposed to potentially be executed on any kind of system (e.g., production, test and demo systems), it is vital that the production data (i.e., real data) is not destroyed or manipulated and that the test data does not remain in the database after the tests have finished. Furthermore, tests executed in parallel against a database should not interfere with each other.

Second, after the software application enters production stage, it is often appropriate to demonstrate its features based on the corresponding demo data stored in the database. It typically takes much effort to demonstrate the features of the application because the demonstration has to be performed individually for each application.

Third, test data are marked so as to be able to differentiate the test data from production data. For example, when test data is temporarily stored in a database, the test data has to be deleted from the database after a test has finished. Several techniques exist for performing this task, such as, for example, masking data by using special data patterns. However, test data created and manipulated in the database by tests may contaminate other data stored in the database (e.g., production data). This can happen if, for example, there is a bug in a software component that can result in erroneously persisting test data in the database.

Furthermore, "dirty reads" may occur with some databases, meaning that even when all test data is assured to be deleted from the database after the end of a test, there is still a risk that the software application might be used in production mode in the same system where the test ran. As such, the application can still "see" this test data even if the test data has not been permanently persisted to the database. This might lead to user confusion and inaccurate application results.

US 2012/084407 (Soulios et al.) discloses a database environment that includes one or more database production servers, one or more database test servers, and a virtualization connection that provides incoming service request traffic to both the database production server and the database test server. However, the database production server responds to the database service requests, while the database test server does not. The database test server may be tested for a variety of different configurations in an attempt to find a better performing configuration. The testing is in real-time as the database test server is subjected to the same incoming service request traffic as the database production server.

### BRIEF DESCRIPTION OF DRAWINGS

The appended drawings merely illustrate example embodiments of the present invention and cannot be considered as limiting its scope.
**FIG. 1** is a block diagram illustrating an example of a system in which embodiments may be practiced;
**FIG. 2** is a ladder diagram illustrating an example embodiment of an operation of the system illustrated in FIG. 1;
**FIG. 3A** is a flowchart of a method, in accordance with an example embodiment, for building a silo aware database;
**FIG. 3B** is a flowchart of a method, in accordance with an example embodiment, for operating a silo aware database; and
**FIG. 4** is a block diagram of a machine in an example form of a computing system within which a set of instructions for causing the machine to perform any one or more of the methodologies discussed herein may be executed.

### DETAILED DESCRIPTION

The description that follows includes systems, methods, techniques, instruction sequences, and computing machine program products that embody illustrative embodiments of the present invention. In the following description, for purposes of explanation, numerous specific details are set forth in order to provide an understanding of various embodiments. It will be evident, however, to those skilled in the art that embodiments of the inventive subject matter may be practiced without these specific details. In general, well-known instruction instances, protocols, structures, and techniques have not been shown in detail.

In the present description, a system is presented to solve the previously described problems associated with test data of databases without risking contamination of production data by tests, demonstrations, or by databases that work with "dirty reads".

Examples of a system and method for accessing a database are described. In one example embodiment, a system receives a request from an application to access a database. The system forms a database table proxy as a logical database. One or more database silos are assigned to the database table proxy. A default database silo from the one or more database silos is defined for the database table proxy. A database silo of the database table proxy corresponding to an application requesting access to the logical database is accessed with a database engine.

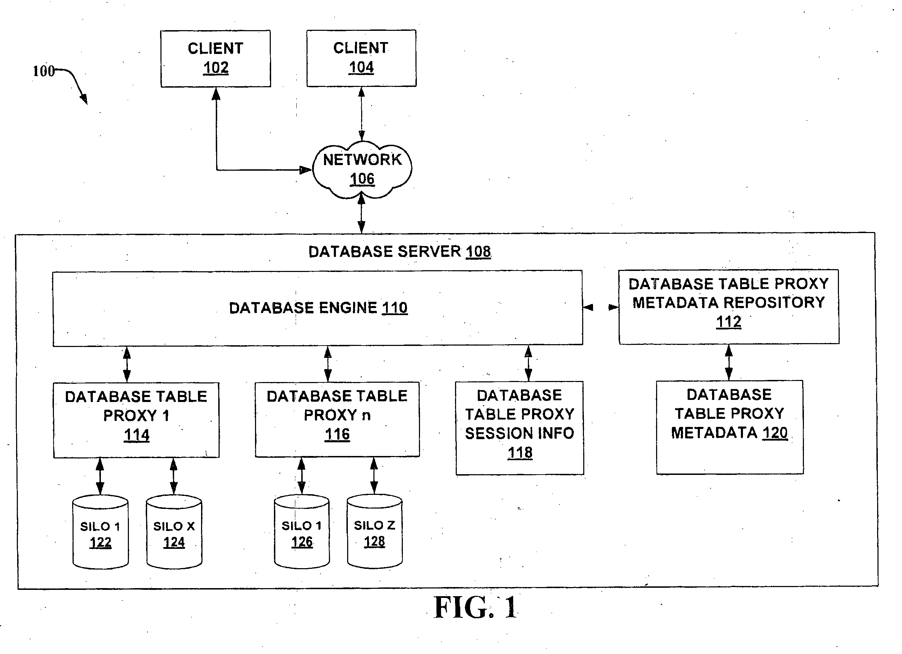

With reference to **FIG. 1****,** a system 100 in which example embodiments may be practiced is shown. The system 100 comprises clients 102, 104 accessing a database server 108. Clients 102, 104 are communicatively coupled to the database server 108 via a computer network 106. The computer network 106 may comprise, for example, one or more of a wired or wireless network, a local area network (LAN), or a wide area network (WAN).

In one embodiment, the database server 108 may include a database engine 110, a database table proxy metadata repository 112, a database table proxy 114, 116, and a database table proxy session information repository 118 storing database table proxy metadata 120. Database silos 122 and 124 may be assigned to database table proxy 114. Similarly, database silos 126 and 128 may be assigned to database table proxy 116. The database engine 110 may receive requests from clients 102, 104 to connect and access the database table proxies 114, 116.

The database table proxy 114, 116 are, in contrast to conventional database systems, a database table in a logical construct rather than a physical one. The present application refers to such a logical construct as a database table proxy. Concepts such as how to define a database table represented by such a proxy and how to access and/or manipulate the data remain similar to existing database systems. However, some of the differences between conventional databases and database silos are further described below.

In one example, the database silos 122, 124, 126, 128 may each refer to a set of data stored in a corresponding database table proxy. A database table proxy can have one or more database silos assigned to the database table proxy. For example, the following illustrates a layout of different database silos that belong to a database table proxy: production data, test data, and demo data for 'Purchase Orders'. Further, a database silo may be identified with a name (e.g., 'Test Data Purchasing'). The database silo may be automatically created when a database table proxy is defined. A database silo may also be uniquely described within a database system using a tuple {DB Table Proxy name, Data Silo name}. Data stored in a database silo can be permanent or non-permanent.

The present application describes example embodiments on how data stored in a logical database table can be physically stored in different physical database silos. Consuming such data, such as by an application or by tests, may differ from the way conventional databases are consumed.

The database table proxy 114, 116 has similar characteristics as a database table in a conventional database system. For example, the following is an example of a format of a database table proxy:
Name, e.g. 'PURCHASE_ORDER_HEADER';
Set of DB columns;
Indexes.

One or more database silos may be defined with a database table proxy. In contrast to conventional database systems, data associated with a database table proxy may be stored in the logical database silos instead of one single physical database table. A consumer, such as an application, that wants to use the database silo can work with a database table proxy in the same way known from conventional database systems. As such, existing applications may run without any code modifications.

Referring back to database silos 122, 124, 126, and 128, there is at least one database silo associated with a database table proxy. A 'Default Data Silo' may be created at database table proxy definition time and may correspond to the physical storage known from conventional database systems. The name of this default database silo may default to the name of the database table proxy.

Any additional database silos may be explicitly defined by specifying a name, e.g. PURCHASE_TEST_SILO, whether the data is to be stored permanently, and whether the database silo can be shared between applications (e.g., for permanent database silos).

If a database silo stores its data permanently, e.g. to a disk, then a flag 'Shareable' describes whether a database silo can be used by several applications in parallel or not. If the flag Shareable is set to TRUE, then it is up to the applications to use a locking mechanism, e.g., in queues, to prevent data inconsistencies. If the flag Shareable is set to FALSE and an application is working with a database silo, then any subsequent application that tries to access the database silo will not be granted access to it. This can be indicated to an application, for example, by throwing a corresponding program exception.

If data is not to be stored permanently, then the content of the database silo may be automatically erased by the database engine 110 after an application terminates.

In one example database silos may be defined in advance before they can be used by a consumer, e.g., an application. In another example, the system 100 may allow database silos to be created on-the-fly. If on-the-fly creation is allowed, a default characteristic set for a database silo might be used, e.g. non-permanent.

The database table proxy metadata repository 112 stores database table proxy metadata 120. The database table proxy metadata repository 112 may be provided to allow the definition of database table proxies 114, 116, and the database silos 122, 124, 126, and 128 associated with them. The database table proxy metadata repository 112 may be accessible by corresponding maintenance user interfaces (UIs) / application programming interfaces (APIs) that allow the creation and/or modification and deletion of database table proxy definitions. The database engine 110 may access the database table proxy metadata repository 112 while processing a database request issued by a consumer, e.g., an application. Existing database table metadata repositories may be extended so that they 'understand' database table proxies or they can be completely replaced by new database table metadata.

For each consumer, e.g., an application, that accesses the database server 108, a database session is created and stored in the database table proxy session information repository 118. The database session represents how a consumer accesses the database engine 110. For silo-aware databases, this database session information may be extended to include information as to which database silo was active and which database table proxy was used within a database session. The following table illustrates database table proxies (DB Table Proxy) and corresponding active database silos (Active DB Silo):

| DB Table Proxy | Active DB Silo |
|---|---|
| POH | PURCHASE_TEST_SILO |
| SOH | SOH |
| SOI | SOI |

In this example, a consumer has indicated to the database engine 110 that it wants to use database silo 'PURCHASE_TEST_SILO' for database table proxy POH, whereas the default silos are to be used for database table proxies SOH (Sales Order Header Data) and SOI (Sales Order Item Data).

This table may set up at application startup and may initially be filled with the default database silo names of the database table proxies used by the application. The table may be altered when a consumer signals to the database engine 110 that throughout the lifetime of the software application, a database silo different from the default silo is to be used or accessed. Database silo specifications supplied with individual database requests may not alter the content of the shown table.

In one example, a database request issued by a consumer can be formulated using standard SQL-syntax. If no database silos besides the default database silo are to be used, no code modifications of the application may be needed. If an application wants to access a specific database silo other than the default database silo, then the application has to specifically request the specific database silo to the database engine 110 using corresponding language extensions. The following illustrates several examples on how to request a specific database silo:

The following request can specify that all database table proxies used by an application work with one and the same database silo name. For example:
EXEC SQL.
SET DATA_SILO = 'PURCHASE_TEST'.
ENDEXEC

In this case, each database table proxy used by an application is assigned a corresponding database silo. All of these database silos have the same name.

A database silo name can be assigned to a specific set of database table proxy names. For example:
EXEC SQL.
SET DATA_SILO = 'PURCHASE_TEST' FOR POH, POI.
ENDEXEC.

In this case, database silo 'PURCHASE_TEST' is assigned to database table proxies POH and POI.

In another example, each database table proxy is assigned a database silo separately. For example:
EXEC SQL.
SET DATA_SILO FOR POH = 'POH_TEST_DATA'.
SET DATA_SILO FOR POI = 'POI_TEST_DATA'.
ENDEXEC.

The request can provide the name of the database silo with a database request that the application issues against the database engine. Such a request can be formulated, for example, as follows:
SELECT * FROM POH (DATA_SILO = 'PURCHASE_TEST_SILO' )
WHERE PO_ID = 1000000017.

where POH represents the name of the DB Table Proxy that is responsible for storing Purchase Order Header data. If a database silo is not explicitly specified, then the default database silo is used for access by the database engine 110.

The effect of all (pseudo) SQL-commands illustrated above is that database requests may be routed to the corresponding database silos. In one example, the database silos have been defined in advance. In another example, the database silos may be created on-the-fly.

The physical storage behind a database silo can be one of the following types: permanent storage, e.g., disk drive(s) just like those used with conventional databases, or non-permanent storage, e.g., main storage. Non-permanent storage in conventional database systems, for example, may be used to keep database table records in the main memory to speed up access to them. When a database session terminates, the data of a non-permanent database silo may be erased.

While the example embodiment of **FIG. 1** shows the database engine 110 and the database table proxy metadata repository 112 in one server system (e.g., database server 108), alternative embodiments may contemplate the various components of the database engine 110 and the database table proxy metadata repository 112 being embodied within several systems (e.g., cloud computing system, server farm system).

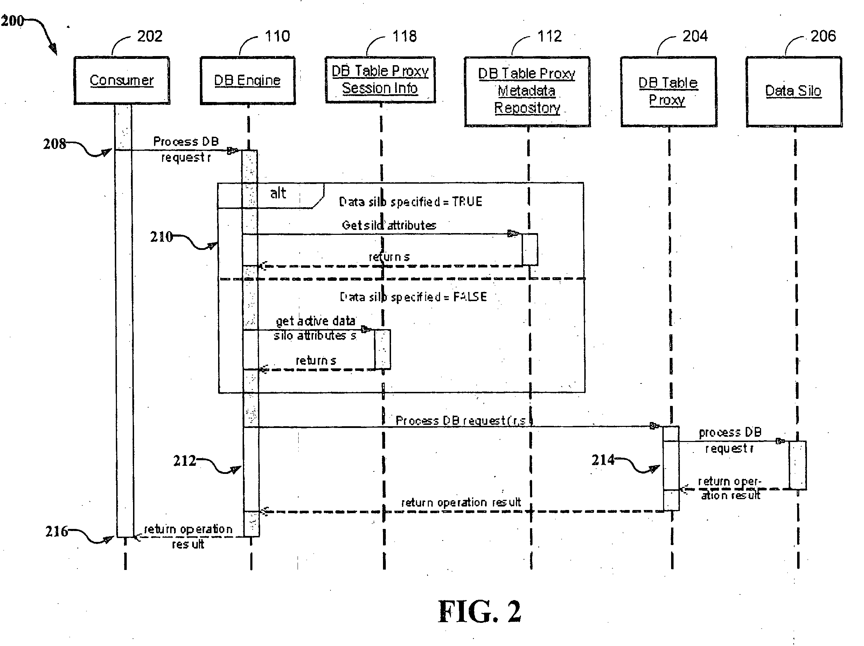

**FIG. 2** is a ladder diagram illustrating an example embodiment of an operation 200 of the system 100 illustrated in FIG. 1. A consumer 202 submits a database request 208 to a database engine 110. The database engine 110 determines at operation 210 which database silo is to be used from the information stored in the database table proxy session information repository. For example, the information stored in the database table proxy session information repository contains either the default silo name for a DB Table Proxy or the name of the silo which was set for the whole application session as previously described.

At operation 210, the database engine 110 determines whether the name of a database silo has been explicitly specified in the database request 208 from the consumer 202. For example, if a specific database silo has been specified in the database request 208, the database engine 110 obtains the corresponding silo attributes from the database table proxy metadata repository 112. If no specific database silo has been specified in the database request 208, the database engine 110 retrieves the silo attributes of the default database silo from database table proxy session information repository 118.

After the name of the database silo has been determined, the database engine 110 submits the request 208 at operation 212 to the database table proxy 204 corresponding to the accessed database silo 206 (i.e., default database silo or specified database silo). The physical storage that is associated with the database silo 206 may be accessed / manipulated. In one example, the database table proxy 204 manipulates data from the corresponding database silo 206 in response to the request 208 at operation 214. The database table proxy 204 returns the results of operation 214 on database silo 206 back to the database engine 110. At operation 216, the database engine 110 returns the results of the operation on database silo 206 back to the consumer 202.

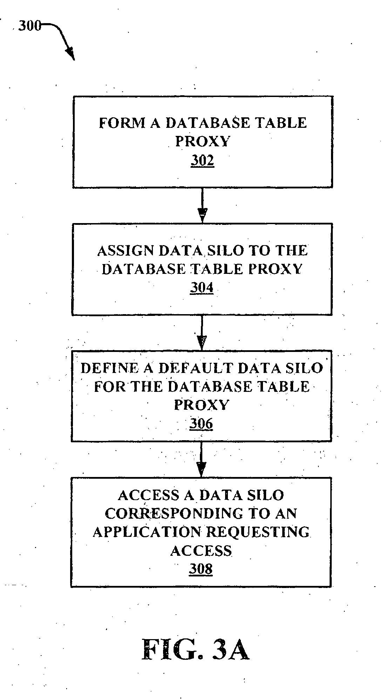

**FIG. 3A** is a flowchart of a method 300, in accordance with an example embodiment, for building a silo-aware database. At operation 302, a database table proxy is formed by using a database engine to define a database table in a logical construct in the database for the database table proxy. As previously described, the database table proxy comprises a database table in a logical construct rather than a physical one as used by conventional database systems. The present application refers to such logical construct as a database table proxy.

At operation 304, one or more database silos are assigned to the database table proxy. The database silos may each refer to a set of data stored in a corresponding database table proxy. A database table proxy can have one or more database silos assigned to it. A database table proxy may have at least one database silo. For example, a layout of the database silos that belong to a database table proxy may include the following: production data, test data and demo data for 'Purchase Orders'. Further, a database silo may have a name (e.g., 'Test Data Purchasing'). In one example, the database silo may be automatically created when a database table proxy is defined. A database silo may also be uniquely described within a database system using the tuple {DB Table Proxy name, Data Silo name}. Data stored in a database silo can be permanent or non-permanent.

At operation 306, a default database silo may be defined from the one or more database silo for the database table proxy. The default database silo may refer to the database silo to be accessed by an application that has not specifically identified a database silo. The application may specify that it wants to use the default database silo to work with the database table proxy. For example, a 'Default Data Silo' may be created at database table proxy definition time and may correspond to the physical storage known from conventional database systems. The name of this default database silo may default to the name of the database table proxy. As such, existing applications may run without any code modifications.

At operation 308, a database silo of the database table proxy corresponding to an application requesting access to the logical database is accessed. For each application that accesses the database server, a database session is created and stored in a database table proxy session information repository. The database session represents how a consumer accesses the database engine. For the silo-aware databases, this database session information may be extended to include information as to which database silo was active and which database table proxy was used within a database session.

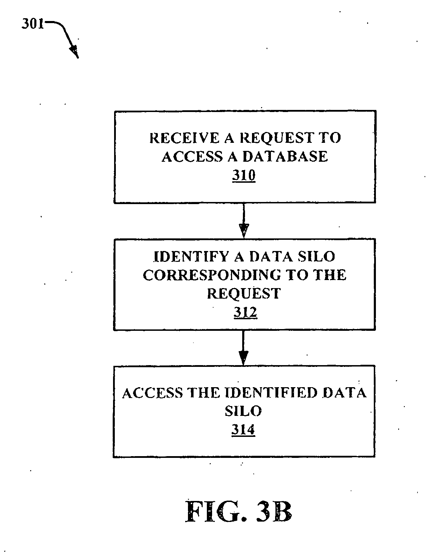

**FIG. 3B** is a flowchart of a method 301, in accordance with an example embodiment, for operating a silo aware database. At operation 310, a database engine receives a request to access the logical database from an application. At operation 312, the database engine determines whether a specific database silo has been specified in the request and identifies the database silo to be accessed in response to the request.

At operation 314, the identified database silo is accessed by the application.

The following are examples of how silo-aware databases can be used in the context of software testing and application demonstrations without contaminating the data from the same database.

### SOFTWARE TEST:

If a piece of software is to be tested, e.g., by a unit test, that may alter the content of a database table proxy, the test can be performed by executing the following steps (shown below in pseudo code):

Define the non-permanent database silo 'PURCHASE_TEST' for DB Table Proxy 'POH' in the DB Table Proxy Metadata Repository.

Prepare the test environment by signalling to the DB runtime that a database silo is to be used during the test run:
METHOD PREPARE_TEST.
SET DATA_SILO = 'PURCHASE_TEST' FOR POH NON-PERMANENT.
ENDMETHOD.
Fill the database silo with test data.
METHOD TEST_DATA_PREPARATION.
DATA: POH_DATA TYPE POH.
POH_DATA-PO_ID = 4711.
POH_DATA-SUPPLIER = '0000127'.
INSERT POH_DATA INTO POH. " data is written to the non-permanent database silo
ENDMETHOD.
Then run the software under test, e.g., by executing a unit test:
METHOD POH_MODIFICATION.
DATA: POH_DATA TYPE POH.
SELECT * FROM POH INTO POH_DATA. " data is read from the non-permanent database silo
WHERE PO_ID = 4711.
POH_DATA-SUPPLIER = '1234567'. " alter supplier data
MODIFY POH FROM POH_DATA " data is written to the non-permanent database silo
COMMIT WORK.
ENDMETHOD.
Verify the test result:
METHOD VERIFY_TEST.
DATA: POH _ALTERED_DATA TYPE POH.
SELECT * FROM POH INTO POH_ALTERED_DATA. "data is read from the non-permanent database silo
WHERE PO_ID = 4711.
IF POH_ALTERED_DATA-SUPPLIER = '1234567'
" test has succeeded
ELSE.
" test has failed
ENDIF.
ENDMETHOD.

One of the benefits of the above test is that production data stored in the default silo of database table proxy POH are not affected. So, no matter how the test code manipulates the data (even erroneously), the production data cannot be altered by running test code.

### APPLICATION DEMOS:

The following is an example of a demo of a Sales Order application. The demo calls for a certain set of demo data which the user does not want to store in the production default database silo of the database table proxies used by the application. This can be accomplished by performing the following steps:

Define the permanent database silo SALES_ORDER_DEMO' for DB Table Proxy 'SOH' in the database table proxy metadata repository.

Create test data and tell the database runtime to store it in the demo database silo:
METHOD CREATE_TEST_DATA
DATA: SOH_DATA TYPE SOH.
SOH_DATA-SO_ID = 1234.
SOH_BUSINESS_PARTNER = '000002573'.

SET DATA_SILO = 'SALES_ORDER_DEMO' FOR SOH PERMANENT.
INSERT SOH FROM SOH_DATA. " Data is written into the permanent database silo
COMMIT WORK. " The test data is persisted.
ENDMETHOD.

Run the application in demo mode by telling it to use the demo data.
PROGRAM SOH_APPLICATION.
DATA: SOH_DATA TYPE SOH.
IF DEMO_MODE = TRUE
SET DATA_SILO = 'SALES_ORDER_DEMO' FOR SOH.
ENDIF.
SELECT * FROM SOH INTO SOH_DATA. " data is read from the
WHERE SO_ID = 1234. "permanent database silo
ENDPROGRAM.

One benefit of the above demonstration is that the demonstration of the application will not interfere with any production SOH data (e.g., stored in the default database silo of database table proxy SOH). Furthermore, additional silos can be defined as either permanent or non-permanent in configuration settings.

Certain embodiments described herein may be implemented as logic or a number of modules, engines, components, or mechanisms. A module, engine, logic, component, or mechanism (collectively referred to as a "module") may be a tangible unit capable of performing certain operations and configured or arranged in a certain manner. In certain exemplary embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor, application specific integrated circuit (ASIC), or array) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in the dedicated and permanently configured circuitry, or in temporarily configured circuitry (e.g., configured by software) may be driven by, for example, cost, time, energy-usage, and package size considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices and can operate on a resource (e.g., a collection of information).

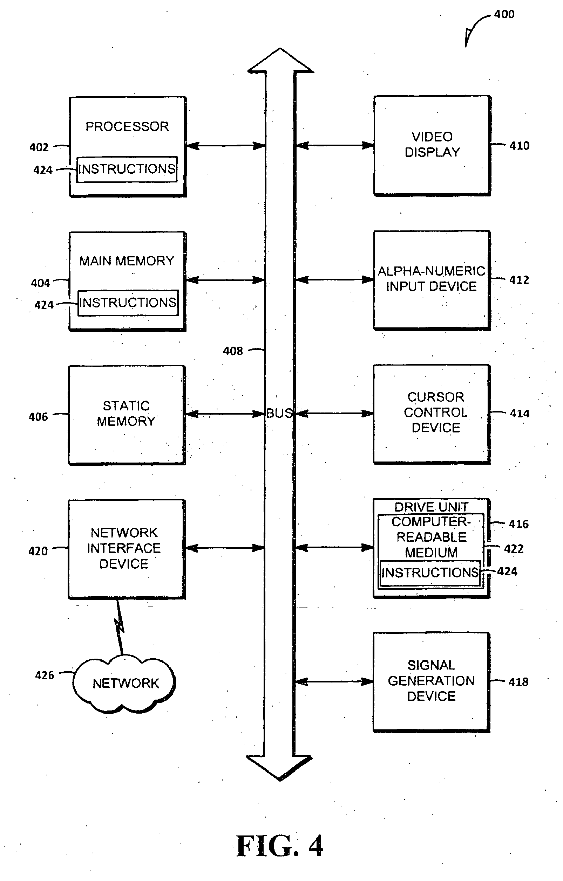

With reference to **FIG. 4****,** an example embodiment extends to a machine in the example form of a computer system 400 within which instructions 424 for causing the machine to perform any one or more of the methodologies discussed herein may be executed. In alternative example embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, a switch or bridge, a server, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 400 may include a processor 402 (e.g., a central processing unit (CPU), a graphics processing unit (GPU) or both), a main memory 404 and a static memory 406, which communicate with each other via a bus 408. The computer system 400 may further include a video display unit 410 (e.g., a liquid crystal display (LCD) or a cathode ray tube (CRT)). In example embodiments, the computer system 400 also includes one or more of an alphanumeric input device 412 (e.g., a keyboard), a user interface (UI) navigation device or cursor control device 414 (e.g., a mouse), a disk drive unit 416, a signal generation device 418 (e.g., a speaker), and a network interface device 420.

The disk drive unit 416 includes a computer-readable storage medium 422 on which is stored one or more sets of instructions 424 and data structures (e.g., software instructions) embodying or used by any one or more of the methodologies or functions described herein. The instructions 424 may also reside, completely or at least partially, within the main memory 404 or within the processor 402 during execution thereof by the computer system 400, the main memory 404 and the processor 402 also constituting machine-readable media.

While the computer-readable storage medium 422 is shown in an exemplary embodiment to be a single medium, the term "computer-readable storage medium" may include a single storage medium or multiple media (e.g., a centralized or distributed database, or associated caches and servers) that store the one or more instructions 424. The term "computer-readable storage medium" shall also be taken to include any tangible medium that is capable of storing, encoding, or carrying instructions for execution by the machine and that causes the machine to perform any one or more of the methodologies of embodiments of the present description, or that is capable of storing, encoding, or carrying data structures used by or associated with such instructions. The term "computer-readable storage medium" shall accordingly be taken to include, but not be limited to, solid-state memories, optical and magnetic media, and non-transitory machine-readable storage media. Specific examples of machine-readable storage media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and CD-ROM and DVD-ROM disks.

The instructions 424 may further be transmitted or received over a communications network 426 using a transmission medium via the network interface device 420 and utilizing any one of a number of well-known transfer protocols (e.g., HTTP). Examples of communication networks include a local area network (LAN), a wide area network (WAN), the Internet, mobile telephone networks, Plain Old Telephone (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible medium to facilitate communication of such software.

It should be noted that various modifications and changes may be made to these example embodiments without departing from the scope of the present disclosure.

As used herein, the term "or" may be construed in either an inclusive or exclusive sense. Additionally, although various example embodiments discussed focus on a specific network-based environment, the embodiments are given merely for clarity in disclosure. Thus, any type of electronic system, including various system architectures, may employ various embodiments of the search system described herein and is considered as being within a scope of example embodiments.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of the example embodiments as represented by the appended claims. The specification and drawings are, accordingly, to be regarded in an illustrative rather than a restrictive sense.

## Claims

1. A computer-implemented-method comprising:
forming (302) a proxy (114,116) for a logical database;
assigning (304) one or more database silos(122-128) to the proxy (114,116);
defining(306) a default database silo from the one or more database silos (122-128) for the proxy (114,116);
accessing (308), using at least one processor, a database silo of the proxy (114,116) corresponding to an application requesting access to the logical database at a database engine; **characterized**
**in that** the proxy (114,116) is a database table proxy (114,116); and
**by** storing a relationship between the one or more database silos (122-128) and the database table proxy (114,116) in a database table proxy metadata repository (112).

2. The computer-implemented method of claim 1, further comprising:
assigning the database silo to the application requesting access to the logical database in a database table proxy session information table (118); and/or
accessing the default database silo when the application requesting access to the logical database does not specify any database silo.

3. The computer-implemented method of any one of the preceding claims, further comprising:
receiving (310) a request to access the logical database from the application;
identifying (312) a database silo from the request; and
accessing (314) the identified database silo from the request for the application.

4. The computer-implemented method of claim 1 or 2, further comprising:
receiving a request to access the logical database from the application;
determining whether the request identifies a database silo; and
identifying the database silo corresponding to the request using a database table proxy session information table (118) when the request does not identify the database silo.

5. The computer-implemented method any one of the preceding claims, further comprising:
manipulating data in the database silo in response to a request of the application without affecting data in other database silos of the database table proxy (114,116); and optionally,
wherein the database silo is stored in a permanent storage device or a non-permanent storage device.

6. The computer-implemented method of any one of the preceding claims,
further comprising defining a database silo with a database silo name, whether data stored in the database silo is to be stored permanently, and whether the database silo can be shared between applications; and
optionally comprising deleting a content of the database silo after the application terminates when the database silo accessed indicates that the data is to not to be stored permanently.

7. A system (100) comprising:
a storage device configured to store a logical database; and
a processing device comprising a database engine configured to form a proxy (114,116) as the logical database, assign one or more database silos (122-128) to the proxy (114,116), define a default database silo from the one or more database silos (122-128) for the proxy (114,116), and access a database silo of the proxy (114,116) corresponding to an application requesting access to the logical database; **characterized in that**
the proxy (114,116) is a database table proxy (114,116); and
the database engine is further configured to store a relationship between the one or more database silos (122-128) and the database table proxy (114,116) in a database table proxy metadata repository (112).

8. The system (100) of claim 7,
wherein the database engine is further configured to assign the database silo to the application requesting access to the logical database in a database table proxy session information table(118); and
wherein the database engine may be further configured to access the default database silo when the application requesting access to the logical database does not specify any database silo.

9. The system (100) of claim 7 or 8, wherein the database engine is further configured to receive a request to access the logical database from the application, to identify a database silo from the request, to access the identified database silo from the request for the application.

10. The system (100) of claim 7 or 8, wherein the database engine is further configured to receive a request to access the logical database from the application, to determine whether the request identifies a database silo, and identify the database silo corresponding to the request using a database table proxy session information table (118) when the request does not identify the database silo.

11. The system (100) of any one of claims 7 to 10, wherein the database engine is further configured to manipulate data in the database silo in response to a request of the application without affecting data in the other database silos of the database table proxy (114,116).

12. The system (100) of any one of claims 7 to 11,
wherein the database engine is further configured to define a database silo with a database silo name, whether data stored in the database silo is to be stored permanently, and whether the database silo can be shared between applications; and
wherein the database engine may be further configured to delete a content of the database silo after the application terminates when the database silo accessed indicates that the content is to not to be stored permanently.

13. A non-transitory machine-readable storage medium storing instructions which, when executed by at least one processor, performs operations according to any one of claims 1 to 6.

## Patentansprüche

1. Computerimplementiertes Verfahren, das umfasst:
Ausbilden (302) eines Proxy (114, 116) für eine logische Datenbank;
Zuweisen (304) eines oder mehrerer Datenbank-Silos (122 - 128) an den Proxy (114, 116);
Definieren (306) eines Vorgabedatenbank-Silos aus dem einen oder den mehreren Datenbank-Silos (122 - 128) für den Proxy (114, 116);
Zugreifen (308) auf ein Datenbank-Silo des Proxy (114, 116) entsprechend einer Anwendung, die Zugriff auf die logische Datenbank an einer Datenbank-Engine anfordert, unter Verwendung wenigstens eines Prozessors; **gekennzeichnet**
**dadurch, dass** der Proxy (114, 116) ein Datenbanktabellen-Proxy (114, 116) ist; und
durch Speichern einer Beziehung zwischen dem einen oder den mehreren Datenbank-Silos (122 - 128) und dem Datenbanktabellen-Proxy (114, 116) in einer Datenbanktabellen-Proxy-Metadatenablage (112).

2. Computerimplementiertes Verfahren nach Anspruch 1, das ferner umfasst:
Zuweisen des Datenbank-Silos an die Anwendung, die Zugriff auf die logische Datenbank anfordert, in einer Datenbanktabellen-Proxy-Sitzungsinformationstabelle (118); und/oder
Zugreifen auf das Vorgabedatenbank-Silo, wenn die Anwendung, die Zugriff auf die logische Datenbank anfordert, kein Datenbank-Silo spezifiziert.

3. Computerimplementiertes Verfahren nach einem der vorangehenden Ansprüche, das ferner umfasst:
Empfangen (310) einer Anforderung für den Zugriff auf die logische Datenbank von der Anwendung;
Identifizieren (312) eines Datenbank-Silos aus der Anforderung; und
Zugreifen (314) auf das identifizierte Datenbanksilo aus der Anforderung für die Anwendung.

4. Computerimplementiertes Verfahren nach Anspruch 1 oder 2, das ferner umfasst:
Empfangen einer Anforderung für den Zugriff auf die logische Datenbank von der Anwendung;
Bestimmen, ob die Anforderung ein Datenbank-Silo identifiziert; und
Identifizieren des Datenbank-Silos, das der Anforderung entspricht, unter Verwendung einer Datenbanktabellen-Proxy-Sitzungsinformationstabelle (118), wenn die Anforderung das Datenbank-Silo nicht identifiziert.

5. Computerimplementiertes Verfahren nach einem der vorangehenden Ansprüche, das ferner umfasst:
Handhaben von Daten in dem Datenbank-Silo ansprechend auf eine Anforderung der Anwendung, ohne Daten in anderen Datenbank-Silos des Datenbanktabellen-Proxy (114, 116) zu beeinflussen; und wobei
das Datenbank-Silo wahlweise in einer Permanentspeichervorrichtung oder einer nicht permanenten Speichervorrichtung gespeichert wird.

6. Computerimplementiertes Verfahren nach einem der vorangehenden Ansprüche,
das ferner das Definieren eines Datenbank-Silos mit einem Datenbank-Silonamen, ob in dem Datenbank-Silo gespeicherte Daten permanent gespeichert werden sollen, und ob das Datenbank-Silo von Anwendungen gemeinsam genutzt werden kann, umfasst; und
das wahlweise das Löschen eines Inhalts des Datenbank-Silos umfasst, nachdem die Anwendung endet, wenn das Datenbank-Silo, auf das zugegriffen wurde, anzeigt, dass die Daten nicht permanent gespeichert werden sollen.

7. System (100), das umfasst:
eine Speichervorrichtung, die konfiguriert ist, um eine logische Datenbank zu speichern; und
eine Verarbeitungsvorrichtung, die eine Datenbank-Engine umfasst, die konfiguriert ist, um einen Proxy (114, 116) als die logische Datenbank auszubilden, ein oder mehrere Datenbank-Silos (122 - 128) an den Proxy (114, 116) zuzuweisen, ein Vorgabedatenbank-Silo aus dem einen oder den mehreren Datenbank-Silos (122 - 128) für den Proxy (114, 116) zu definieren und auf ein Datenbank-Silo des Proxy (114, 116) entsprechend einer Anwendung, die Zugriff auf die logische Datenbank anfordert, zuzugreifen;
**dadurch gekennzeichnet, dass**
der Proxy (114, 116) ein Datenbanktabellen-Proxy (114, 116) ist; und
die Datenbank-Engine ferner konfiguriert ist, um eine Beziehung zwischen dem einen oder mehreren Datenbank-Silos (122 - 128) und dem Datenbanktabellen-Proxy (114, 116) in einer Datenbanktabellen-Proxy-Metadatenablage (112) zu speichern.

8. System (100) nach Anspruch 7,
wobei die Datenbank-Engine ferner konfiguriert ist, um das Datenbank-Silo an die Anwendung, die Zugriff auf die logische Datenbank anfordert, in einer Datenbanktabellen-Proxy-Sitzungsinformationstabelle (118) zuzuweisen; und
wobei die Datenbank-Engine ferner konfiguriert sein kann, um auf das Vorgabedatenbank-Silo zuzugreifen, wenn die Anwendung, die Zugriff auf die logische Datenbank anfordert, kein Datenbank-Silo spezifiziert.

9. System (100) nach Anspruch 7 oder 8, wobei die Datenbank-Engine ferner konfiguriert ist, um eine Anforderung für den Zugriff auf die logische Datenbank von der Anwendung zu empfangen, um ein Datenbank-Silo aus der Anforderung zu identifizieren, um auf das identifizierte Datenbanksilo aus der Anforderung für die Anwendung zuzugreifen.

10. System (100) nach Anspruch 7 oder 8, wobei die Datenbank-Engine ferner konfiguriert ist, um eine Anforderung für den Zugriff auf die logische Datenbank, von der Anwendung zu empfangen, um zu bestimmen, ob die Anforderung ein Datenbank-Silo identifiziert, und das Datenbank-Silo, das der Anforderung entspricht, unter Verwendung einer Datenbanktabellen-Proxy-Sitzungsinformationstabelle (118) zu bestimmen, wenn die Anforderung das Datenbank-Silo nicht identifiziert.

11. System (100) nach einem der Ansprüche 7 bis 10, wobei die Datenbank-Engine ferner konfiguriert ist, um Daten in dem Datenbank-Silo ansprechend auf eine Anforderung der Anwendung zu handhaben, ohne Daten in anderen Datenbank-Silos des Datenbanktabellen-Proxy (114, 116) zu beeinflussen.

12. System (100) nach einem der Ansprüche 7 bis 11,
wobei die Datenbank-Engine ferner konfiguriert ist, um ein Datenbank-Silo mit einem Datenbank-Silonamen, ob in dem Datenbank-Silo gespeicherte Daten permanent gespeichert werden sollen, und ob das Datenbank-Silo von Anwendungen gemeinsam genutzt werden kann, zu definieren; und
wobei die Datenbank-Engine ferner konfiguriert sein kann, um einen Inhalt des Datenbank-Silos zu löschen, nachdem die Anwendung endet, wenn das Datenbank-Silo, auf das zugegriffen wurde, anzeigt, dass die Daten nicht permanent gespeichert werden sollen.

13. Nichtflüchtiges maschinenlesbares Speichermedium, das Anweisungen speichert, die, wenn sie von wenigstens einem Prozessor ausgeführt werden, Betriebe nach einem der Ansprüche 1 bis 6 ausführen.

## Revendications

1. Procédé mis en oeuvre par ordinateur comprenant :
former (302) un serveur mandataire (114, 116) pour une base de données logique ;
attribuer (304) un ou plusieurs silos de base de données (122 à 128) au serveur mandataire (114, 116) ;
définir un silo de base de données par défaut parmi le ou les silos de base de données (122 à 128) pour le serveur mandataire (114, 116) ;
accéder (308), en utilisant au moins un processeur, à un silo de base de données du serveur mandataire (114, 116) correspondant à une application demandant l'accès à la base de données logique au niveau d'un moteur de base de données ;
**caractérisé**
**en ce que** le serveur mandataire (114, 116) est un serveur mandataire de table de base de données (114, 116) ; et
**par le fait de** stocker une relation entre le ou les silos de base de données (122 à 128) et le serveur mandataire de table de base de données (114, 116) dans un référentiel à métadonnées de serveur mandataire de table de base de données (112).

2. Procédé mis en oeuvre par ordinateur selon la revendication 1, comprenant en outre :
attribuer le silo de base de données à l'application demandant l'accès à la base de données logique dans un tableau d'informations de session de serveur mandataire de table de base de données (118) ; et/ou
accéder au silo de base de données par défaut lorsque l'application demandant l'accès à la base de données logique ne spécifie pas de silo de base de données.

3. Procédé mis en oeuvre par ordinateur selon l'une quelconque des revendications précédentes, comprenant en outre :
recevoir (310) une demande d'accès à la base de données logique de l'application ;
identifier (312) un silo de base de données à partir de la demande ; et
accéder (314) au silo de base de données identifié à partir de la demande pour l'application.

4. Procédé mis en oeuvre par ordinateur selon la revendication 1 ou 2, comprenant en outre :
recevoir une demande d'accès à la base de données logique de l'application ;
déterminer si la demande identifie un silo de base de données ; et
identifier le silo de base de données correspondant à la demande en utilisant un tableau d'informations de session de serveur mandataire de table de base de données (118) lorsque la demande n'identifie pas le silo de base de données.

5. Procédé mis en oeuvre par ordinateur selon l'une quelconque des revendications précédentes, comprenant en outre :
manipuler des données dans le silo de base de données en réponse à une demande de l'application sans affecter de données dans d'autres silos de base de données du serveur mandataire de table de base de données (114, 116) ; et en option,
dans lequel le silo de base de données est stocké dans un dispositif de stockage permanent ou un dispositif de stockage non permanent.

6. Procédé mis en oeuvre par ordinateur selon l'une quelconque des revendications précédentes,
comprenant en outre définir un silo de base de données avec un nom de silo de base de données, si des données stockées dans le silo de base de données doivent être stockées en permanence et si le silo de base de données peut être partagé entre des applications ; et
comprenant en option effacer un contenu du silo de base de données après que l'application se termine lorsque le silo de base de données accédé indique que les données ne doivent pas être stockées en permanence.

7. Système (100) comprenant :
un dispositif de stockage configuré pour stocker une base de données logique ; et
un dispositif de traitement comprenant un moteur de base de données configuré pour former un serveur mandataire (114, 116) comme la base de données logique, attribuer un ou plusieurs silos de base de données (122 à 128) au serveur mandataire (114, 116), définir un silo de base de données par défaut parmi le ou les silos de base de données (122 à 128) pour le serveur mandataire (114, 116) et accéder à un silo de base de données du serveur mandataire (114, 116) correspondant à une application demandant l'accès à la base de données logique ; **caractérisé en ce que**
le serveur mandataire (114, 116) est un serveur mandataire de table de base de données (114, 116) ; et
le moteur de base de données est en outre configuré pour stocker une relation entre le ou les silos de base de données (122 à 128) et le serveur mandataire de table de base de données (114, 116) dans un référentiel à métadonnées de serveur mandataire de table de base de données (112).

8. Système (100) selon la revendication 7,
dans lequel le moteur de base de données est en outre configuré pour attribuer le silo de base de données à l'application demandant l'accès à la base de données logique dans un tableau d'informations de session de serveur mandataire de table de base de données (118) ; et
dans lequel le moteur de base de données peut en outre être configuré pour accéder au silo de base de données par défaut lorsque l'application demandant l'accès à la base de données logique ne spécifie pas de silo de base de données.

9. Système (100) selon la revendication 7 ou 8, dans lequel le moteur de base de données est en outre configuré pour recevoir une demande d'accès à la base de données logique de l'application, pour identifier un silo de base de données à partir de la demande, pour accéder au silo de base de données identifié à partir de la demande pour l'application.

10. Système (100) selon la revendication 7 ou 8, dans lequel le moteur de base de données est en outre configuré pour recevoir une demande d'accès à la base de données logique de l'application, pour déterminer si la demande identifie un silo de base de données, et identifier le silo de base de données correspondant à la demande en utilisant un tableau d'informations de session de serveur mandataire de table de base de données (118) lorsque la demande n'identifie pas le silo de base de données.

11. Système (100) selon l'une quelconque des revendications 7 à 10, dans lequel le moteur de base de données est en outre configuré pour manipuler des données dans le silo de base de données en réponse à une demande de l'application sans affecter de données dans les autres silos de base de données du serveur mandataire de table de base de données (114, 116).

12. Système (100) selon l'une quelconque des revendications 7 à 11,
dans lequel le moteur de base de données est en outre configuré pour définir un silo de base de données avec un nom de silo de base de données, si des données stockées dans le silo de base de données doivent être stockées en permanence et si le silo de base de données peut être partagé entre des applications ; et
dans lequel le moteur de base de données peut en outre être configuré pour effacer un contenu du silo de base de données après que l'application se termine lorsque le silo de base de données accédé indique que le contenu ne doit pas être stocké en permanence.

13. Support de stockage non transitoire lisible par machine stockant des instructions qui, lors de son exécution par au moins un processeur, réalise des opérations selon l'une quelconque des revendications 1 à 6.
